Europäisches Patentamt

European Patent Office

Office européen des brevets

(19)

(11) EP 0 539 777 B1

(12) **EUROPEAN PATENT SPECIFICATION**

(45) Date of publication and mention
of the grant of the patent:
**03.01.1996 Bulletin 1996/01**

(51) Int Cl.⁶: **C09J 129/04**, C08L 29/04
// (C09J129/04, 179:00)

(21) Application number: 92117194.8

(22) Date of filing: **08.10.1992**

(54) **Aqueous adhesive and powder mix for its preparation**

Wässriges Klebmittel und Pulvermischung für seine Herstellung

Adhésif aqueux et mélange de poudre pour sa préparation

(84) Designated Contracting States:
**DE FR GB NL SE**

(30) Priority: **14.10.1991 JP 295120/91**

(43) Date of publication of application:
**05.05.1993 Bulletin 1993/18**

(73) Proprietor: **KURARAY CO., LTD.**
**Kurashiki-City (JP)**

(72) Inventors:
• **Inuyama, Akitomo**
**Kurashiki-city, Okayama (JP)**

• **Miyazaki, Hirotoshi**
**Kurashiki-city, Okayama (JP)**
• **Maruyama, Hitoshi**
**Kurashiki-city, Okayama (JP)**

(74) Representative: **VOSSIUS & PARTNER**
**D-81634 München (DE)**

(56) References cited:
**BE-A- 657 093**

• **PATENT ABSTRACTS OF JAPAN (C-667) &**
**JP-A-12 39 190**

## Description

The present invention relates to an aqueous adhesive, a process for adhering paper and a powdered composition to be processed into said aqueous adhesive.

There are widely used as adhesives, in particular those for paper, natural adhesives such as starch, casein, gelatin, arabic gum, sodium alginate and guar gum; processed starches such as carboxymethylcellulose (hereinafter referred to as CMC), oxidized starch and methylcellulose; synthetic resin emulsions such as acrylic emulsion, polyvinyl acetate emulsion, ethylene-vinyl acetate copolymer emulsion and styrene-butadiene copolymer (SBR) latex, polyvinyl alcohol (hereinafter referred to as PVA)-based adhesives and the like.

One of known PVA-based adhesives comprises, according to Japanese Patent Application Laid-open Nos. 45678/1991 and 45656/1991, PVA, an amino compound, a crosslinking agent and an inorganic filler. The above literature mentions as concrete examples of the amino compound, polyethylenimine (Epomin SP-018, molecular weight: 1,800; made by Japan Catalytic Chemical Industry Co., Ltd.), hexamethylenediamine (molecular weight: 116) and the like and also mentions 10,000 to 50,000 cps as a preferred viscosity of the aqueous adhesive. These adhesives, however, have been insufficient in initial adhesive strength.

Japanese Patent Application Laid-open No. 130184/1990 discloses a composition usable for an intermediate layer of heat-sensitive recording materials and comprising PVA, a crosslinking agent and an inorganic filler. This composition is, however, to improve resistance to water, plasticizer and oil and has insufficient initial adhesive strength.

Japanese Patent Application Laid-open No. 94744/1974 discloses a mixing agent for adhesives, comprising PVA, an amino compound and an inorganic filler. The literature describes as examples of the amino compound low molecular amino compounds such as ethylenediamine (molecular weight: 60) and hexamethylenediamine (molecular weight: 116) and that the mixing agent is principally used for mixing with urea-resin based adhesives. The mixing agent as an adhesive, however, is very poor in initial adhesive strength.

In recent years, the speed of applying an adhesive has increased to lower the cost and increase the productivity of the final product. To achieve the high application speed, there is demanded, for the adhesives used, improvement in high-speed applicability and initial adhesive strength. Adhesives comprising conventional natural adhesives or processed starches have low initial adhesive strength and are hence not usable for high-speed application unless closed setting time is prolonged to prevent the bonded part from peeling off. Natural adhesives and processed starches further have the problems of poor viscosity stability, putrefaction, dispersion in qualities and the like. Synthetic resin-based emulsions have, while having good initial adhesiveness, the problems of generating aggregates during high-speed application due to large shear between the rolls, generating wavy patterns upon transfer through a roll and generating cobwebbing phenomenum.

Synthetic resin-based emulsions further have problems in insufficient initial tacking, in particular wet tacking, poor resistance to creep and tendency to "skin" on the surface.

PVA-based adhesives have good initial adhesive strength as compared with the above natural adhesives, processed starches and synthetic resin-based emulsions, and improvement of their high-speed applicability has been desired.

Accordingly, an object of the present invention is to provide an aqueous adhesive being free from above problems and particularly suitable for adhesion of paper.

Another object of the present invention is to provide a process for adhering paper which comprises using the above aqueous adhesive.

Still another object of the present invention is to provide a powdered composition to be used as a raw material for the above aqueous adhesive.

These objects have been achieved by providing an aqueous adhesive comprising an aqueous solution which comprises PVA (A), a polyethylenimine (B) having a molecular weight of at least 5,000 and clay (C) having an average particle diameter of 0.5 to 8 $\mu$m, and has a viscosity as measured with Brookfield type viscometer at 30°C of 1,000 to 9,000 mPa.s (cps), said component (B) and (C) being contained in amounts of 0.1 to 8 parts by weight and 5 to 400 parts by weight, respectively, based on 100 parts by weight of component (A).

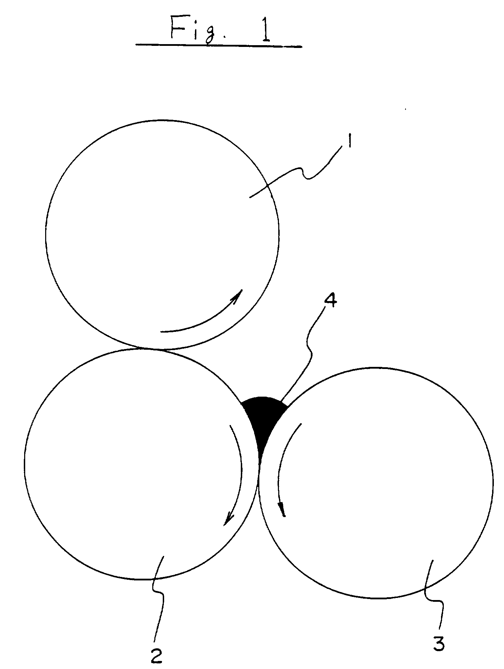

FIGURE 1 is a schematic diagram of an apparatus used for evaluating high-speed applicability.

The aqueous adhesive of the present invention is described first. The PVA (A) used in the invention is a polymer principally comprising vinyl alcohol units. Examples of units other than vinyl alcohol units which may be contained in the PVA (A) are those derived from vinyl esters such as vinyl acetate, vinyl butyrate, vinyl pivalate and vinyl versatate, among which commercially preferred is vinyl acetate unit. The PVA preferably has a degree of polymerization of 300 to 25,000, more preferably 1,000 to 10,000, and a saponification degree of 50 to 100 mol%, more preferably 95 to 99 mol%.

The PVA used in the present invention may also contain small amounts of other units than vinyl alcohol units and vinyl ester units, within limits not to impair the object of the present invention. Examples of other units are those derived from carboxyl-containing monomers such as (meth)acrylic acid, maleic acid, maleic anhydride, fumaric acid, crotonic acid and itaconic acid, or salts thereof; those from sulfonic acid-containing monomers such as sodium acrylamide-2-methylpropanesulfonate, sodium allylsulfonate and sodium vinylsulfonate and those from quaternary ammonium salt-containing monomers such as (meth)acrylamide-propyltrimethyl-ammonium chloride.

Where an ionic monomer is to be contained, its amount is preferably not more than 3 mol% to prevent the resulting adhesive from decreasing in water resistance after adhesion and the paper after adhesion from curling. The PVA (A) used in the present invention may be produced by any process and for example by saponifying, in a usual manner, a polyvinyl ester obtained by polymerizing the corresponding vinyl ester.

The polyethylenimine (B) used in the present invention may be any linear or branched polyethylenimine with no specific limitation, insofar as it has a molecular weight of at least 5,000. The polyethylenimine preferably has a molecular weight of 10,000 to 80,000. Polyethyleneimines having a molecular weight of less than 5,000 have low initial adhesive strength.

Examples of the clay (C) used in the present invention are those based on kaolinite, pyrophyllite, sericite, zieclite and halloysite, montmorillonite and dickite. The clay used in the invention has an average particle diameter of 0.5 to 8μm. With an average particle diameter of less than 0.5 μm, the clay becomes expensive and tends to have poor blendability. On the other hand, with the average particle diameter exceeding 8μm, the clay tends to precipitate during storage of the resulting adhesive or cause the adhesive to have poor initial adhesive strength or roll applicability.

It is necessary that the component (B) be contained in an amount of 0.1 to 8 parts by weight based on 100 parts by weight of the component (A), preferably 0.5 to 6.5 parts by weight on the same basis.

If the content of component (B) is less than 0.1 part by weight or exceeds 10 parts by weight, the initial adhesive strength will decrease.

It is necessary that the component (C) be contained in an amount of 5 to 400 parts by weight based on 100 parts by weight of the component (A), preferably 100 to 350 parts by weight on the same basis. If the content of component (C) is less than 5 parts by weight, the resulting adhesive will, besides being expensive, develop initial adhesive strength very late and have low equilibrium adhesive strength, low resistance to water and moisture and low resistance to shear stress and creep. If the content of the component (C) exceeds 400 parts by weight, the adhesive strength and roll applicability will decrease.

The aqueous adhesive of the present invention, which comprises a mixed aqueous solution comprising PVA (A), a polyethylenimine (B) and clay (C), can be provided with still improved initial adhesive strength by incorporation of a multivalent metal salt such as aluminum sulfate, potassium aluminate, sodium aluminate, magnesium silicate-aluminate and aluminum silicate. Incorporation of an organic acid such as fumaric acid, tartaric acid, lactic acid or acetic acid or an inorganic acid such as hydrochloric acid or sulfuric acid, which makes the aqueous adhesive neutral or acid, also increases the initial adhesive strength. Among these acids, tartaric acid is particularly preferred.

The aqueous adhesive of the present invention may incorporate other additives than the above within limits not to deteriorate the effect of the invention. Examples of the additives are metal salts of phosphoric acids, such as sodium polyphosphate and sodium hexametaphosphate, inorganic substances such as water glass and anionic polymers such as sodium alginate and a -olefin-maleic anhydride copolymers. Incorporation of these substances improves the fluidity to a still larger extent.

Other examples of the additives that can be incorporated are carboxymethylcellulose, various -antifoams, antiseptics, mildew-proof agents, pigments, deodorants and perfumes. Further water-soluble boron compounds such as boric acid, borax and borates of polyhydric alcohols such as glycerine can be added to improve the adhesive strength.

The above additives are added preferably in an amount of not more than 10 parts by weight based on 100 parts by weight of the PVA (A), because larger amounts will adversely affect the high-speed applicability.

The aqueous adhesive of the present invention may further incorporate, for the purpose of preventing freezing or providing flexibility, an alcohol such as methanol, ethylene glycol or glycerine or an organic solvent such as cellosolve.

It is necessary that the aqueous adhesive of the present invention have a viscosity as measured with Brookfield viscometer (6 rpm) at 30°C of 1,000 to 9,000 mPa.s (cps), preferably 1,000 to 5,000 mPa.s (cps). With the viscosity being less than 1,000 mPa.s (cps), the initial adhesive strength is low. With the viscosity exceeding 9,000 mPa.s (cps), the roll applicability decreases.

There is no particular limitation to the solid concentration of the aqueous adhesive of the present invention, but it is preferably 10 to 50% by weight, more preferably 20 to 40% by weight.

Various processes are available for preparing the aqueous adhesive of the present invention. For example, a process comprises mixing PVA (A), a polyethylenimine (B) and clay (C) and, as required, other additives and throwing the mixture in water with stirring. Another process comprises successively throwing in water, with stirring, a polyethylenimine (B), clay (C) and PVA (A).

The adhesive may be prepared either by batch-system or continuous system and is dissolved by heating. The heating is conducted by any optional process such as direct heating process which comprises using a jet cracker or preparation tank and blowing steam into a slurry or indirect heating process which comprises using a jacket.

The aqueous adhesive of the present invention is suitably used for production of corrugated fiberboard and is also useful for adhering paperboards, paper tubes, Japanese sliding partitions and wall papers, labels to bottles and cans, wood and plastics.

The process for adhering paper of the present invention is next described. The process comprises using the aqueous adhesive described above.

While the process for adhering paper of the present invention produces the most desirable effect when used for paper-paper adhesion, it is also useful for adhesion of paper to plastic or metal.

Any paper can be used in the present invention, but preferred are thin papers having a thickness of about 50μm through cardboard having a thickness of 5 mm. It is desirable that at least one, more preferably both, of the adherends to be bonded to each other be a sheet of cardboard having a thickness of 300μm to 3 mm. Also desirable are paper for corrugated paperboard and paper for paper tubes.

The adhesive is preferably applied at a temperature of 10 to 60°C, more preferably 30 to 50°C.

The temperature of the paper at the time when the adhesive is applied thereto is either room temperature or an elevated temperature.

The adhesive is applied in an amount as converted to solid of preferably 1 to 50 $g/m^2$, more preferably 5 to 30 $g/m^2$.

There are no specific restrictions with respect to the method of applying the adhesive, and there are available roll application, spraying, brushing and the like, among which roll application is preferred.

There are no specific restrictions with respect to the application speed of the adhesive, but, the aqueous adhesive of the present invention being applicable at high speeds, the speed is preferably 50 to 150 m/min in view of production efficiency of the adhesion process line used and adhesiveness.

The process for adhering paper of the present invention is particularly useful for adhering corrugated paperboards, cardboards, paper tubes and the like, and applicable at high speed using a corrugator machine or the like. Where the adhesive is transferred, there are available two processes. That is, one comprises applying the adhesive to the facing surfaces of the two papers to be patched, patching the papers and passing them between press rolls, and the other comprises applying the adhesive with an adhesive transferring roll to only one of the papers to be patched, patching the papers and passing them between press rolls.

The powdered composition of the present invention is now described.

The powdered composition (I) of the present invention is one comprising the components (A), (B) and (C) explained in the description of the above aqueous adhesive, in the incorporation amounts satisfying the conditions explained in the description of the above aqueous adhesive and yielding, by addition of water, an aqueous adhesive having a viscosity as measured with Brookfield viscometer at 30°C of 1,000 to 9,000 mPa.s (cps).

The preferred range and additives explained in the descriptions of the above aqueous adhesive and process for adhering paper also apply to the powdered composition (I) of the present invention. There is no particular limitation to the average particle diameter of the component (A), but it is preferably 10 to 1,000μm, more preferably 100 to 500μm. The powdered composition (I) of the present invention is useful as a raw material for aqueous adhesives, in particular those used for adhering paper.

The powdered composition (II) of the present invention is explained next.

The powdered composition (II) of the present invention comprises the same components (A), (B) and (C) as in the powdered composition (I) in the same incorporation ratio and may contain water in an amount of not more than 20 parts by weight, preferably not more than 10 parts by weight based on 100 parts by weight of total composition.

The powdered composition (II) of the present invention contains an aluminum salt such as aluminum sulfate, potassium aluminate, sodium aluminate, magnesium silicate-aluminate or aluminum silicate, in an amount of 0.2 to 20 parts by weight, preferably 0.5 to 10 parts by weight, based on 100 parts by weight of total composition. The aluminum salt may have any average particle diameter with no particular limitation, but the average particle diameter is preferably 1 to 500μm, more preferably 2 to 100μm. The aluminum salt can help prevent the powdered composition from blocking. Thus, the flowability of the composition does not decrease even when it has absorbed moisture, so that the composition can readily be taken out from the container having contained it and does not decrease its solubility in water. The powdered composition (II) is useful as a raw material of aqueous adhesives, in particular those for paper. The desirable range and additives explained in the descriptions of the above aqueous adhesive, process for adhering paper and powdered composition (I) also apply to the powdered composition (II) of the present invention.

The adhesive of the present invention has excellent initial adhesive strength and hence requires only short closed setting time, thereby having improved high-speed applicability, i.e. being applicable at a very high speed.

The process for adhering paper of the present invention exhibits excellent initial adhesive strength and hence requires only short closed setting time, thereby enabling the adhesive to be applied to paper at a high speed.

The powdered composition (I) of the present invention is useful as a raw material for aqueous adhesives having good initial adhesive strength and high-speed applicability.

Further the powdered composition (II) of the present invention is, in addition to its utility as a raw material for aqueous adhesives having good initial adhesive strength and high-speed applicability, excellent in its handling because the powder does not block even when it has absorbed moisture.

EXAMPLES

In the Examples and Comparative Examples that follow, "parts" and "%" mean "parts by weight" and "% by weight", respectively, unless otherwise specified.

The types of the PVA's and polyethylenimines used in the following Examples are shown in Table 1 and Table 2, respectively.

Table 1

| Coding of PVA | Degree of polymerization | Degree of saponification (mol%) |
|---|---|---|
| PVA-1 | 1,300 | 98.6 |
| PVA-2 | 1,750 | 98.1 |
| PVA-3 | 2,400 | 98.9 |
| PVA-4 | 4,000 | 98.5 |
| PVA-5 | 8,000 | 98.7 |

Table 2

| Coding of polyethylenimine | Molecular weight |
|---|---|
| P-1 | 100,000 |
| P-2 | 80,000 |
| P-3 | 10,000 |
| P-4 | 1,200 |
| P-5 | 300 |

The fillers used in the following Examples and Comparative Examples are as follows.

| | Average particle dia. |
|---|---|
| Filler 1: Zieclite-based clay | 1.2 µm |
| Filler 2: Kaolinite-based clay | 0.6 µm |
| Filler 3: Pyrophyllite-based clay | 2.3 µm |
| Filler 4: China clay | 8 µm |
| Filler 5: Calcium carbonate | 2.5 µm |

Various characteristics of adhesives were evaluated according to the following methods.

High-speed applicability

Three rolls as shown in FIGURE 1 were used for test. The surface speeds of rubber roll (1) and metal roll (3) are adjusted at 100 m/min and 50 m/min, respectively. An adhesive specimen (4) is placed in a space formed by rubber roll (2) and metal roll (3) and evaluated for the following items.

(a) Jumping: To observe if the liquid drops of the adhesive jump out of the surfaces of the rolls (1) and (2).
(b) Roll transferability: To observe if the adhesive uniformly transfers to roll (1).
(c) Foamability: To check the degree of "biting" of foams into the adhesive (4). This is expressed in terms of ratio between the weights of the adhesive specimen having a volume of 100 ml before and after the test.

$$\text{Foamability } (\%) = (\text{weight after test}) \, /(\text{weight before test}) \times 100$$

(d) Cobwebbing: To observe cobwebbing of the adhesive specimen between roll (1) and roll (2).

Initial adhesive strength

The adhesive strength is measured with an adhesiveness tester (ASM-01; made by Japan Tobacco Inc.) under the following conditions.

Paper to be adhered: liner paper (Cobb's sizing degree: 19 $g/m^2$/2 min, weight: 412 $g/m^2$)

Measuring atmosphere: 20°C, 65% RH
Amount of adhesive applied: 50 g/m$^2$ (wet amount)
Temperature of adhesive: 49°C
Application speed: 0.75 m/sec
Open time : 1 sec
(time of still-standing after application)
Pressure: 2 kg
Pressing time: 1, 2, 5 and 10 sec
Closed time : 1 sec
(time of still-standing after pressing)
Peeling speed: 300 mm/min

Examples 1 through 7 and Comparative Examples 1 through 11

Powdered compositions comprising PVA's, polyethylenimines and fillers as shown in Table 3 and 0.2 part of an antifoam (Pionin K17, made by Takemoto Yushi Co.) were each thrown in water with stirring and the mixtures were heated to a temperature of 96°C to dissolve PVA. To each of the aqueous solutions obtained, water and/or CMC was added to the designated viscosity to give the adhesives shown in Table 3. The adhesives thus obtained were evaluated for high-speed applicability and initial adhesive strength. The results are shown in Table 4 and Table 5.

Table 3

| | PVA (A) | | Polyethylenimine (B) | | Filler (C) | | Solid conc. (%) |
|---|---|---|---|---|---|---|---|
| | Type | Parts | Type | Parts | Type | Parts | |
| Example 1 | PVA-1 | 100 | P-1 | 7.9 | Filler-1 | 117 | 19.9 |
| Example 2 | PVA-2 | 100 | P-3 | 2.3 | Filler-2 | 130 | 19.7 |
| Example 3 | PVA-3 | 100 | P-2 | 4.7 | Filler-4 | 157 | 19.3 |
| Example 4 | PVA-4 | 100 | P-3 | 1.0 | Filler-3 | 206 | 19.0 |
| Example 5 | PVA-2 | 100 | P-1 | 6.4 | Filler-3 | 319 | 35.0 |
| Example 6 | PVA-3 | 100 | P-2 | 6.3 | Filler-3 | 319 | 34.2 |
| Example 7 | PVA-2 | 100 | P-3 | 6.3 | Filler-4 | 319 | 35.1 |
| Comp.Ex. 1 | PVA-2 | 100 | - | 0.0 | Filler-3 | 117 | 19.9 |
| Comp.Ex. 2 | PVA-2 | 100 | P-2 | 0.05 | Filler-2 | 117 | 19.6 |
| Comp.Ex. 3 | PVA-2 | 100 | P-3 | 5.0 | Filler-2 | 600 | 34.8 |
| Comp.Ex. 4 | PVA-2 | 100 | P-2 | 15.0 | Filler-4 | 175 | 34.9 |
| Comp.Ex. 5 | PVA-3 | 100 | P-2 | 4.5 | Filler-5 | 349 | 35.1 |
| Comp.Ex. 6 | PVA-5 | 100 | P-4 | 6.3 | Filler-3 | 349 | 33.8 |
| Comp.Ex. 7 | PVA-3 | 100 | P-5 | 2.0 | Filler-3 | 306 | 34.3 |
| Comp.Ex. 8 | PVA-4 | 100 | P-5 | 16.3 | Filler-3 | 349 | 34.2 |
| Comp.Ex. 9 | PVA-2 | 100 | P-2 | 9.8 | Filler-2 | 340 | 32.5 |
| Comp.Ex. 10 | PVA-4 | 100 | P-2 | 7.8 | Filler-3 | 350 | 42.0 |
| Comp.Ex. 11 | PVA-4 | 100 | P-2 | 9.2 | Filler-2 | 340 | 35.2 |

Table 4

| | Viscosity of adhesive[1] (mPa.s) (cps) | High-speed applicability | | | |
| | | Jumping[2] | Roll trans-ferabi lity[3] | Foam-abili ty (%) | Cob-web-bing [4] |
|---|---|---|---|---|---|
| Example 1 | 1,970 | ○ | ○ | 92 | ○ |
| ″ 2 | 2,071 | ○ | ○ | 95 | ○ |
| ″ 3 | 1,980 | ○ | ○ | 92 | ○ |
| ″ 4 | 1,950 | ○ | ○ | 91 | ○ |
| ″ 5 | 4,790 | ○ | ○ | 93 | ○ |
| ″ 6 | 4,810 | ○ | ○ | 95 | ○ |
| ″ 7 | 4,850 | ○ | ○ | 91 | ○ |
| Comp.Ex. 1 | 1,990 | △ | ○ | 85 | × |
| ″ 2 | 1,970 | △ | ○ | 83 | × |
| ″ 3 | 4,860 | × ∼ △ | ○ | 86 | × |
| ″ 4 | 4,910 | △ | ○ | 87 | × ∼ △ |
| ″ 5 | 4,970 | △ | ○ | 82 | × ∼ △ |
| ″ 6 | 5,100 | × ∼ △ | ○ | 81 | × |
| ″ 7 | 4,840 | △ | ○ | 83 | × ∼ △ |
| ″ 8 | 4,850 | △ | ○ | 81 | × ∼ △ |
| ″ 9 | 800 | ○ | △ | 88 | △ |
| ″ 10 | 13,000 | × | △ | 80 | × |
| ″ 11 | 2,800 | △ | △ | 85 | × ∼ △ |

1) Measured with Brookfield viscometer (6 rpm) at 30°C.

2) ○ : no jumping, △ : a little jumping, × : a lot of

jumping

3) ○ : good, △ : a little non-uniform transferring

4) ○ : no cobwebbing, △ : a little cobwebbing, × : a lot of

cobwebbing

Table 5

| Pressing time | Initial adhesive strength (g/cm) | | | |
|---|---|---|---|---|
| | 1 sec | 2 sec | 5 sec | 10 sec |
| Example 1 | 15 | 60 | 500 | 1,390 |
| Example 2 | 18 | 75 | 550 | 1,490 |
| Example 3 | 20 | 90 | 620 | 1,590 |
| Example 4 | 20 | 105 | 700 | 1,700 |
| Example 5 | 30 | 110 | 770 | 1,750 |
| Example 6 | 30 | 105 | 780 | 1,700 |
| Example 7 | 30 | 98 | 760 | 1,690 |
| Comp. Ex. 1 | 0 | 0 | 30 | 210 |
| Comp. Ex. 2 | 0 | 10 | 66 | 550 |
| Comp. Ex. 3 | 10 | 18 | 300 | 1,100 |
| Comp. Ex. 4 | 10 | 20 | 310 | 1,000 |
| Comp. Ex. 5 | 0 | 25 | 130 | 830 |
| Comp. Ex. 6 | 10 | 50 | 350 | 860 |
| Comp. Ex. 7 | 0 | 10 | 57 | 430 |
| Comp. Ex. 8 | 0 | 20 | 148 | 780 |
| Comp. Ex. 9 | 0 | 5 | 50 | 350 |
| Comp. Ex. 10 | 10 | 55 | 380 | 800 |
| Comp. Ex. 11 | 10 | 48 | 370 | 900 |

Example 8

A powdered composition was prepared by mixing well 100 parts of PVA powder containing 4% of moisture (degree of polymerization: 1,700, degree of saponification: 98.5 mol%, average particle diameter: 300μm), 16.7 parts of a 30% aqueous solution of a polyethylenimine (molecular weight: 80,000), 70 parts of china clay having an average particle diameter of 8μm and 5 parts of aluminum sulfate powder having an average particle diameter of 8μm. The composition had a water content of 8.2% and an aluminum sulfate content of 2.6%. In a polyethylene bag having a thickness of 200μm, 100 g of the composition thus obtained was packed and the package was allowed to stand at 30°C, 80% R.H. for 1 week. The PVA powder showed no blocking and the composition had a good flowability.

Comparative Example 12

A powdered composition was prepared by mixing well 100 parts of PVA powder containing 4% of moisture (degree of polymerization: 1,750, degree of saponification: 98.5 mol%, average particle diameter: 300μm), 36.7 parts of a 30% aqueous solution of a polyethylenimine (molecular weight: 80,000) and 70 parts of china clay having an average particle diameter of 8μm. The composition had a water content of 14.4%.

In a polyethylene bag having a thickness of 200μm, 100 g of the composition thus obtained was packed and the package was allowed to stand at 30°C, 80% R.H. for 1 week. The PVA powder underwent blocking and the composition had a poor flowability, so that it was difficult to take out the composition from the bag.

Comparative Example 13

A powdered composition was prepared by mixing well 100 parts of PVA powder containing 4% of moisture (degree of polymerization: 1,750, degree of saponification: 98.5 mol%, average particle diameter: 300μm), 16.7 parts of a polyethylenimine (molecular weight: 10,000) having a purity of 99.9% and 70 parts of china clay having an average particle diameter of 8μm. The composition had a water content of 2.1%. In a polyethylene bag, 100 g of the composition thus obtained was packed and the package was allowed to stand at 30°C, 80% R.H. for 1 week. The PVA powder underwent blocking and the composition had a poor flowability, so that it was difficult to take out the composition from the bag.

## EP 0 539 777 B1

### Claims

1. An aqueous adhesive comprising an aqueous solution which comprises

   (A) polyvinyl alcohol,
   (B) a polyethylenimine having a molecular weight of at least 5,000 and
   (C) clay having an average particle diameter of 0.5 to 8 μm,

   and has a viscosity as measured with a Brookfield type viscometer at 30°C of 1,000 to 9,000 mPa.s (cps), said components(B) and (C) being contained in amounts of 0.1 to 8 parts by weight and 5 to 400 parts by weight, respectively, based on 100 parts by weight of component (A).

2. A process for adhering paper which comprises using the aqueous adhesive of Claim 1.

3. A powdered composition comprising the components (A), (B) and (C) defined in Claim 1 in amounts as defined in Claim 1 and giving aqueous adhesives having a viscosity as defined in Claim 1.

4. A powdered composition comprising the components (A), (B) and (C) defined in Claim 1 in amounts as defined in Claim 1 and containing 0.2 to 20 parts by weight of an aluminum salt based on 100 parts by weight of total composition.

### Patentansprüche

1. Wässeriger Klebstoff, umfassend eine wässerige Lösung, welche

   (A) Polyvinylalkohol,
   (B) ein Polyethylenimin mit einem Molekulargewicht von mindestens 5000 und
   (C) Ton mit einem mittleren Teilchendurchmesser von 0,5 bis 8 μm umfaßt

   und eine Viskosität, gemessen mit einem Viskosimeter vom Brookfield-Typ bei 30°C, von 1000 bis 9000 mPa.s (cps) hat,
   wobei die Komponenten (B) und (C) in Mengen von 0,1 bis 8 Gewichtsteilen beziehungsweise 5 bis 400 Gewichtsteilen, bezogen auf 100 Gewichtsteile der Komponente (A), enthalten sind.

2. Verfahren zum Kleben von Papier, welches die Verwendung des wässerigen Klebstoffes nach Anspruch 1 umfaßt.

3. Pulvermasse, welche die in Anspruch 1 definierten Komponenten (A), (B) und (C) in Mengen wie in Anspruch 1 definiert umfaßt und wässerige Klebstoffe mit einer wie in Anspruch 1 definierten Viskosität liefert.

4. Pulvermasse, umfassend die in Anspruch 1 definierten Komponenten (A), (B) und (C) in Mengen wie in Anspruch 1 definiert und enthaltend 0,2 bis 20 Gewichtsteile eines Aluminiumsalzes, bezogen auf 100 Gewichtsteile der gesamten Masse.

### Revendications

1. Adhésif aqueux comprenant une solution aqueuse qui comprend :

   (A) de l'alcool polyvinylique,
   (B) une polyéthylène-imine ayant un poids moléculaire d'au moins 5 000 et
   (C) une argile ayant un diamètre moyen des particules de 0,5 à 8 μm,

   et qui a une viscosité, mesurée avec un viscosimètre de type Brookfield à 30°C, de 1 000 à 9 000 mPa.s (cP),
   lesdits composants (B) et (C) étant contenus respectivement en des quantités de 0,1 à 8 parties en poids et de 5 à 400 parties en poids pour 100 parties en poids du composant (A).

2. Procédé pour faire adhérer du papier, qui comprend l'utilisation de l'adhésif aqueux de la revendication 1.

3.  Composition en poudre comprenant les composants (A), (B) et (C) définis dans la revendication 1 en les quantités définies dans la revendication 1 et formant des adhésifs aqueux ayant une viscosité telle que définie dans la revendication 1.

4.  Composition en poudre comprenant les composants (A), (B) et (C) définis dans la revendication 1 en les quantités définies dans la revendication 1 et contenant 0,2 à 20 parties en poids d'un sel d'aluminium pour 100 parties en poids de la composition totale.

Fig. 1